# EUROPÄISCHE PATENTANMELDUNG

(11) **EP 4 450 317 A1**
(43) Veröffentlichungstag der Anmeldung: **23.10.2024**
(21) Anmeldenummer: 24170202.6
(22) Anmeldetag: 15.04.2024
(51) Int. Cl.: B60L 3/04, B60L 3/00, B60L 53/10, B60L 53/22

(54) **LADE-/ENTLADEVORRICHTUNG, SPEICHERVORRICHTUNG, FAHRZEUG UND VERFAHREN ZUM BETREIBEN DER LADE-/ENTLADEVORRICHTUNG**

(30) Priorität: 18.04.2023 DE 102023109752
(71) Anmelder: Huber Automotive AG, 73347 Mühlhausen (DE)
(72) Erfinder: HUBER, Martin, 89231 Neu-Ulm (DE); STOHRER, Jörg, 73092 Heiningen (DE)
(74) Vertreter: Winter, Brandl - Partnerschaft mbB

(57) **Zusammenfassung**

Die vorliegende Erfindung betriff eine Lade-/Entladevorrichtung die umfasst: einen ersten Gleichstrom-Anschluss, der mit einer Gleichstrom-Speichereinheit verbunden oder verbindbar ist; einen zweiten Gleichstrom-Anschluss, der mit einem Gleichstrom-Bus oder einem Inverter verbunden oder verbindbar ist; einen positiven Leitungsabschnitt, der einen positiven Pol des ersten Gleichstrom-Anschlusses mit einem positiven Pol des zweiten Gleichstrom-Anschlusses verbindet; einen negativen Leitungsabschnitt, der einen negativen Pol des ersten Gleichstrom-Anschlusses mit einem negativen Pol des zweiten Gleichstrom-Anschlusses verbindet; und eine Steuereinheit zum Steuern eines Lade-/Entladevorgangs. Der positive Leitungsabschnitt und der negative Leitungsabschnitt weisen jeweils zwei parallele Leitungen auf. Mindestens eine der beiden Leitungen ist mittels eines Schaltelements schaltbar ausgebildet ist. Die Steuereinheit ist so konfiguriert ist, dass sie jeweils beide Leitungen in dem positiven Leitungsabschnitt und dem negativen Leitungsabschnitt bei einem Ladevorgang zuschaltet und jeweils nur eine der beiden Leitungen in dem positiven Leitungsabschnitt und dem negativen Leitungsabschnitt bei einem Entladevorgang zuschaltet.

## Beschreibung

### Technisches Gebiet

Die vorliegende Erfindung betriff eine Lade-/Entladevorrichtung, eine Speichervorrichtung, die die Lade-/Entladevorrichtung aufweist, ein Fahrzeug, das die Speichervorrichtung aufweist, und ein Verfahren zum Betreiben der Lade-/Entladevorrichtung. Die vorliegende Erfindung betrifft insbesondere ein innovatives Zu- und Abschaltkonzept für Hochvoltbatterien, das für den Einsatz in Elektrofahrzeugen und für andere Anwendungen mit Hochvoltbatterien entwickelt wurde.

Elektrofahrzeuge, wie etwa Elektroautos, sollen zum Reduzieren einer Standzeit zunehmend schneller geladen werden, um eine Akzeptanz zu erhöhen. Aus diesem Grund treten zukünftig beim Laden deutlich höhere Ströme als bei einem normalen Entladevorgang z.B. während eines Fahrbetriebs auf. Demzufolge werden ein Ladevorgang und ein Entladevorgang, d.h. ein Fahrbetrieb, nicht länger unter den gleichen Rahmenbedingungen durchgeführt.

Konventionelle Lade-/Entladevorrichtungen stellen eine sichere Zu- und Abschaltung eines Hochvoltspeichers über zweipolige Ausführung bereit. Ein Laden und Entladen des Hochvoltspeichers wird über dieselben Leitungspfade ausgeführt. Demzufolge sind die Leistungspfade auch für einen hohen Ladestrom auszulegen. Um eine Sicherheit zu gewährleisten, ist in mindestens einem der Leitungspfade eine Sprengsicherung, eine sog. Pyro-Fuse, angeordnet, die bei einem ungewollten Vorfall ausgelöst wird, um den Leitungspfad vollständig zu trennen bzw. aufzusprengen. Nach Auslösen der Sprengsicherung ist der Leitungspfad nicht mehr betreibbar und das Elektrofahrzeug kann nicht mehr bewegt werden.

Es ist daher Aufgabe der vorliegenden Erfindung die genannten Nachteile zu beseitigen oder zumindest zu mindern. Insbesondere sollen Weiterentwicklungen für eine Lade-/Entladevorrichtung, eine Speichervorrichtung, ein Fahrzeug und ein Verfahren zum Betreiben der Lade-/Entladevorrichtung bereitgestellt werden.

Diese Aufgabe wird durch die Gegenstände mit den Merkmalen gemäß der unabhängigen Ansprüche gelöst. Vorteilhafte Ausführungsformen sind Gegenstand der abhängigen Ansprüche.

Eine erfindungsgemäße Lade-/Entladevorrichtung ist insbesondere für Elektrofahrzeuge verwendbar und umfasst einen ersten Gleichstrom-Anschluss, der mit einer Gleichstrom-Speichereinheit verbunden oder verbindbar ist, und einen zweiten Gleichstrom-Anschluss, der mit einem Gleichstrom-Bus oder einem Inverter verbunden oder verbindbar ist. Demzufolge ist der erste Gleichstrom-Anschluss mit einem positiven Pol und einem negativen Pol einer Gleichstrom-Speichereinheit, wie etwa einer Hochvoltbatterie, verbunden oder verbindbar. Der zweite Gleichstrom-Anschluss ist mit einem positiven Pol und einem negativen Pol des Gleichstrom-Busses oder des Inverters verbunden oder verbindbar. Die Lade-/Entladevorrichtung ist somit zwischen der Gleichstrom-Speichereinheit und dem Gleichstrom-Bus / dem Inverter angeschlossen bzw. anschließbar.

Die Lade-/Entladevorrichtung weist ferner einen positiven Leitungsabschnitt, der einen positiven Pol des ersten Gleichstrom-Anschlusses mit einem positiven Pol des zweiten Gleichstrom-Anschlusses verbindet, und einen negativen Leitungsabschnitt, der einen negativen Pol des ersten Gleichstrom-Anschlusses mit einem negativen Pol des zweiten Gleichstrom-Anschlusses verbindet, auf. Demzufolge ist über den positiven Leitungsabschnitt und den negativen Leitungsabschnitt eine leitende Verbindung zwischen dem ersten Gleichstrom-Anschluss und dem zweiten Gleichstrom-Anschluss herstellbar.

Ferner umfasst die Lade-/Entladevorrichtung eine Steuereinheit zum Steuern eines Lade-/Entladevorgangs. Die Steuereinheit kann insbesondere so konfiguriert sein, dass sie bestimmt, ob ein Ladevorgang oder ein Entladevorgang durchgeführt wird. Die Steuereinheit kann dazu eine Richtung bzw. ein Vorzeichen eines Stroms, der zu der Gleichstrom-Speichereinheit oder von dieser wegfließt, bestimmen.

Der positive Leitungsabschnitt und der negative Leitungsabschnitt weisen jeweils zwei parallele Leitungen auf. Das heißt, der positive Leitungsabschnitt weist zwei parallele Leitungen auf und der negative Leitungsabschnitt weist zwei parallele Leitungen auf. Mindestens eine der beiden Leitungen in dem positiven Leitungsabschnitt ist mittels eines Schaltelements schaltbar ausgebildet. In gleicher Weise ist mindestens eine der beiden Leitungen in dem negativen Leitungsabschnitt mittels eines Schaltelements schaltbar ausgebildet. Die Schaltelemente können dabei Leistungsschalter, wie etwa High-Voltage Contactor (HVC), sein, durch die der Energiefluss von und zur Gleichstrom-Speichereinheit steuerbar ist. Diese Leistungsschalter sind meist als mechanische Schalter mit begrenzter Schalthäufigkeit und Betriebsdauer ausgebildet.

Die Steuereinheit ist so konfiguriert, dass sie jeweils beide Leitungen in dem positiven Leitungsabschnitt und dem negativen Leitungsabschnitt bei einem Ladevorgang zuschaltet. Demzufolge werden die Schalelemente in der mindestens einen Leitung bei einem Ladevorgang geschlossen, so dass eine Ladung der Gleichstrom-Speichereinheit über beide Leitungen erfolgt. Die Steuereinheit ist ferner so konfiguriert, dass sie jeweils nur eine der beiden Leitungen in dem positiven Leitungsabschnitt und dem negativen Leitungsabschnitt bei einem Entladevorgang, insbesondere einem Fahrbetrieb, zuschaltet. Das heißt, das Schaltelement in der mindestens einen Leitung wird bei einem Entladevorgang geöffnet, so dass der Entladevorgang nur über eine der Leitungen in den Leitungsabschnitten erfolgt. Folglich sind die Leitungen nur auf einen Entladevorgang auszulegen. Bei einem Ladevorgang werden dann beide Leitungen verwendet, so dass die Gleichstrom-Speichereinheit mit einem hohen Strom aufladbar ist.

Vorteilhafterweise kann in der nicht schaltbaren Leitung in dem positiven Leitungsabschnitt oder dem negativen Leitungsabschnitt eine Sprengsicherung angeordnet sein. Alternativ kann in beiden nicht schaltbaren Leitungen in dem positiven Leitungsabschnitt und dem negativen Leitungsabschnitt eine Sprengsicherung, eine sog. Pyro-Fuse, angeordnet sein. Die Steuereinheit kann so konfiguriert sein, dass sie die Sprengsicherung(en) im Fall eines Fehlers, insbesondere eines Überstroms, bei einem Entladevorgang zündet. Demzufolge kann ein größerer Schaden bei Auftreten eines Fehlers während eines Entladevorgangs verhindert werden. Die Steuereinheit kann weiter so konfiguriert sein, dass sie nach einem Auslösen der Sprengsicherung(en) die beiden schaltbaren Leitungen in dem positiven Leitungsabschnitt oder dem negativen Leitungsabschnitt zuschaltet. Folglich kann beispielsweise ein Elektrofahrzeug in einem Notlaufmodus, wie etwa einem Limp-Home-Betrieb, weiterhin beweget werden.

Bevorzugt können jeweils beide Leitungen in dem positiven Leitungsabschnitt und dem negativen Leitungsabschnitt mittels eines jeweiligen Schaltelements schaltbar ausgebildet sein. Demzufolge sind die beiden Leitungen in dem positiven Leitungsabschnitt und die beiden Leitungen in dem negativen Leitungsabschnitt schaltbar ausgebildet. Die Steuereinheit kann so konfiguriert sein, dass sie die beiden Leitungen in dem positiven Leitungsabschnitt und dem negativen Leitungsabschnitt bei einem Entladevorgang wechselweise zuschaltet. Demzufolge kann eine Lebensdauer der Komponenten, insbesondere der Schaltelemente, erhöht werden, da nur die Hälfte der Ladevorgänge, d.h. der Schaltvorgänge, durchzuführen sind.

Weiter bevorzugt kann in den beiden Leitungen des positiven Leitungsabschnitts jeweils eine Sprengsicherung angeordnet sein. Alternativ kann in den beiden Leitungen des negativen Leitungsabschnitts jeweils eine Sprengsicherung angeordnet sein. Die Steuereinheit kann so konfiguriert sein, dass sie bei einem Entladevorgang nur die Sprengsicherungen in der zugeschalteten Leitung im Fall eines Fehlers, insbesondere eines Überstroms, bei einem Entladevorgang zündet. Demzufolge kann eine zuverlässige Trennung von der Gleichstrom-Speichereinheit auch bei einem wechselweisen Zuschalten der Leitungen des positiven Leitungsabschnitts und des negativen Leitungsabschnitts erfolgen. Es steht nach Auslösen der Sprengsicherung weiterhin eine redundante Leitung in dem positiven Leitungsabschnitt oder dem negativen Leitungsabschnitt für einen Notlaufmodus des Elektrofahrzeugs zur Verfügung.

Mit Vorteil kann sowohl in den beiden Leitungen des positiven Leitungsabschnitts als auch in den beiden Leitungen des negativen Leitungsabschnitts jeweils eine Sprengsicherung angeordnet sein. Die Steuereinheit kann so konfiguriert sein, dass sie bei einem Entladevorgang nur die Sprengsicherungen in den zugeschalteten Leitungen im Fall eines Fehlers, insbesondere eines Überstroms, bei einem Entladevorgang zündet. Demzufolge kann eine zuverlässige Trennung von der Gleichstrom-Speichereinheit auch bei einem wechselweisen Zuschalten der Leitungen des positiven Leitungsabschnitts und des negativen Leitungsabschnitts erfolgen. Darüber hinaus kann eine allpolige Trennung von der Gleichstrom-Speichervorrichtung, d.h. eine Trennung vom positiven Pol und eine Trennung vom negativen Pol, erfolgen. Auch in diesem Fall stehen redundante Leitungen in dem positiven Leitungsabschnitt und dem negativen Leitungsabschnitt für einen Notlaufmodus zur Verfügung.

Vorteilhafterweise kann die Steuereinheit so konfiguriert sein, dass sie bei einem Entladevorgang immer jeweils die gleiche Leitung in dem positiven Leitungsabschnitt und in dem negativen Leitungsabschnitt zuschaltet. Das heißt, es wird in dem positiven Leitungsabschnitt und in dem negativen Leitungsabschnitt immer das gleiche Leitungspaar zugeschaltet. Die Steuereinheit kann dann so konfiguriert sein, dass sie die Sprengsicherungen in den gleichen beiden Leitungen über einen gemeinsamen Sprengsicherungs-Treiber zündet. Demzufolge muss die Steuereinheit nur einen Befehl zum Zünden der Sprengsicherungen ausgeben, so dass ein Aufwand zum Zünden der Sprengsicherungen verringert ist.

Eine erfindungsgemäße Speichervorrichtung weist eine Gleichstrom-Speichereinheit, insbesondere einen Hochvolt-Speicher mit einer Spannung im Bereich von 400 V oder 800 V, und einen Gleichstrom-Bus oder einen Inverter auf. Es ist denkbar, dass ein Inverter an dem Gleichstrom-Bus angeschlossen ist. Eine von der Gleichstrom-Speichereinheit ausgegebene Gleichstrom-Energie kann über den Inverter in Wechselstrom-Energie gewandelt werden, um damit einen Elektromotor eines Elektrofahrzeugs anzutreiben. Die erfindungsgemäße Speichervorrichtung weist ferner eine Lade-/Entladevorrichtung gemäß einem der vorhergehenden Aspekte auf. Die Lade-/Entladevorrichtung ist demnach zwischen der Gleichstrom-Speichereinheit und dem Gleichstrom-Bus / dem Inverter angeschlossen. Demzufolge können die gleichen Vorteile wie für die Lade-/Entladevorrichtung erreicht werden.

Ein erfindungsgemäßes Fahrzeug weist die Speichervorrichtung gemäß dem vorhergehenden Aspekt auf. Demzufolge können die gleichen Vorteile wie für die Lade-/Entladevorrichtung erreicht werden.

Ein erfindungsgemäßes Verfahren zum Betreiben der erfindungsgemäßen Lade-/Entladevorrichtung umfasst einen Schritt zum Bestimmen, ob ein Ladevorgang oder ein Entladevorgang, insbesondere ein Fahrbetrieb, durchgeführt wird. Hierzu kann beispielsweise eine Richtung bzw. ein Vorzeichen eines Stroms, der zu der Gleichstrom-Speichereinheit hin oder von dieser weg fließt, erfasst werden. Danach erfolgt ein Schritt zum Zuschalten der beiden Leitungen in dem positiven Leitungsabschnitt und der beiden Leitungen in dem negativen Leitungsabschnitt in dem Fall, dass ein Ladevorgang durchgeführt wird. Alternativ erfolgt ein Schritt zum Zuschalten nur einer der beiden Leitungen in dem positiven Leitungsabschnitt und nur einer der beiden Leitungen in dem negativen Leitungsabschnitt für den Fall, dass ein Entladevorgang durchgeführt wird.

Nachfolgend wird die vorliegende Erfindung unter Bezugnahme auf die Figuren im Detail beschrieben. Gleichen Elementen wird dabei das gleiche Bezugszeichen zugewiesen.

### Kurzbeschreibung der Figuren

Fig. 1 zeigt eine konventionelle Lade-/Entladevorrichtung;
Fig. 2 zeigt eine Lade-/Entladevorrichtung gemäß einer Ausführungsform der vorliegenden Erfindung; und
Fig. 3 zeigt eine Lade-/Entladevorrichtung gemäß einer weiteren Ausführungsform der vorliegenden Erfindung.

### Beschreibung von Ausführungsformen

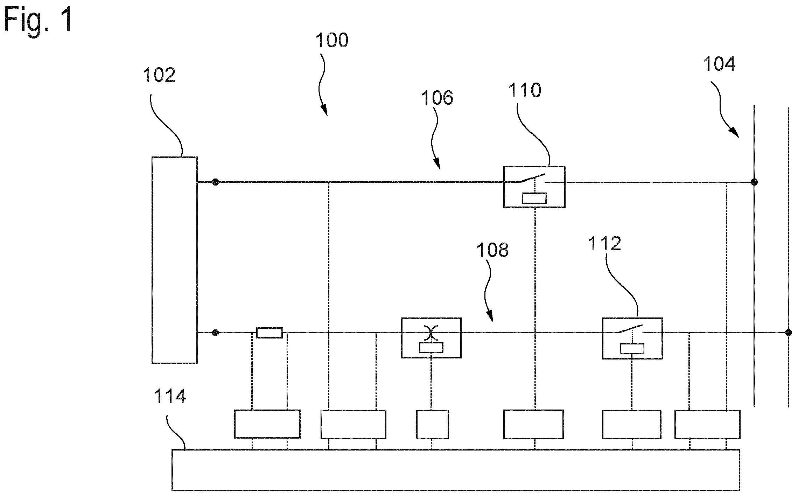

Fig. 1 zeigt eine konventionelle Lade-/Entladevorrichtung 100, die zwischen einer Gleichstrom-Speichereinheit 102 und einem Gleichstrom-Bus 104 angeschlossen ist. Die Lade-/Entladevorrichtung 100 weist einen positiven Leitungsabschnitt 106, der aus einer Leitung gebildet ist, und einen negativen Leitungsabschnitt 108, der ebenfalls aus einer Leitung gebildet ist, auf. In den Leitungen der Leitungsabschnitte 106 bzw. 108 ist jeweils ein Schaltelement 110 bzw. 112 angeordnet, um eine Verbindung zwischen der Gleichstrom-Speichereinheit 102 und dem Gleichstrom-Bus 104 zu- und wegzuschalten. Die Schaltelemente 110 bzw. 112 sind dabei durch eine Steuereinheit 114 steuerbar. Da zukünftig Elektrofahrzeuge jedoch mit einem höheren Strom zu laden sind, müssen die Leitungen der Leitungsabschnitte 106 bzw. 108 sowie die in den Leitungsabschnitt 106 bzw. 108 angeordneten Schaltelemente 110 bzw. 112 auf den hören Ladestrom ausgelegt sein.

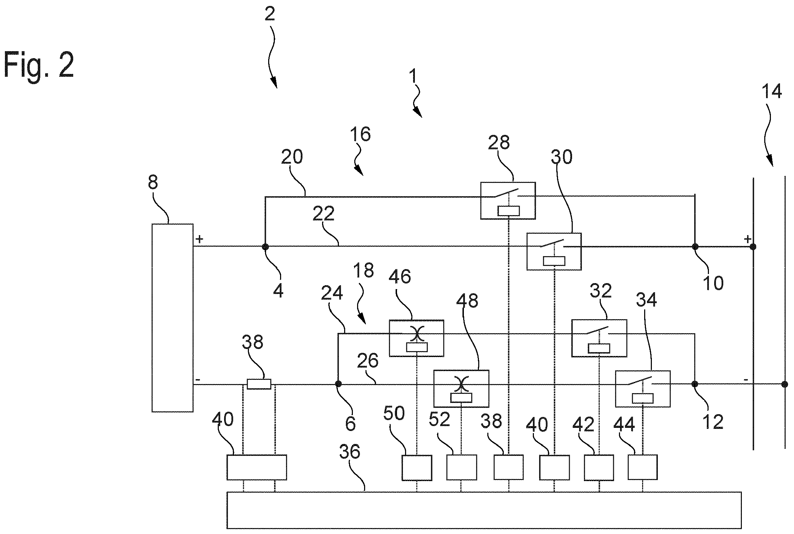

Fig. 2 zeigt eine Lade-/Entladevorrichtung 1 gemäß einer Ausführungsform der vorliegenden Erfindung, die in einer Speichervorrichtung 2 verwendet wird. Die Lade-/Entladevorrichtung 1 und somit auch die Speichervorrichtung 2 sind insbesondere für einen Einsatz in einem Elektrofahrzeug vorgesehen. Die Lade-/Entladevorrichtung 1 weist einen ersten Gleichstrom-Anschluss, der durch einen positiven Pol 4 und einen negativen Pol 6 gebildet ist, auf. Der erste Gleichstrom-Anschluss ist mit einer Gleichstrom-Speichereinheit 8 verbunden oder verbindbar. Das heißt, der positive Pol 4 ist mit einem positiven Pol der Gleichstrom-Speichereinheit 8 verbunden oder verbindbar und der negative Pol 6 ist mit einem negativen Pol der Gleichstrom-Speichereinheit 8 verbunden oder verbindbar.

Darüber hinaus weist die Lade-/Entladevorrichtung 1 einen zweiten Gleichstrom-Anschluss auf, der durch einen positiven Pol 10 und einer negativen Pol 12 gebildet ist. Der zweite Gleichstromanschluss ist vorliegend mit einem Gleichstrom-Bus 14 verbunden. Das heißt, der positive Pol 10 ist mit einer positiven Leitung des Gleichstrom-Busses 14 verbunden oder verbindbar und der negative Pol 12 ist mit einer negativen Leitung des Gleichstrom-Busses 14 verbunden oder verbindbar. An dem Gleichstrom-Bus 14 kann beispielsweise ein Inverter zum Wandeln einer von der Gleichstrom-Speichereinheit 8 bereitgestellten Gleichstrom-Energie in Wechselstrom-Energie zum Antreiben eines Elektromotors angeschlossen sein. Alternativ kann der Inverter auch direkt mit dem zweiten Gleichstromanschluss verbunden werden.

Die Lade-/Entladevorrichtung 1 umfasst weiter einen positiven Leitungsabschnitt 16, der den positiven Pol 4 des ersten Gleichstromanschlusses mit dem positiven Pol 10 des zweiten Gleichstromanschlusses verbindet, und einen negativen Leitungsabschnitt 18, der den negativen Pol 6 des ersten Gleichstromanschlusses mit dem negativen Pol 12 des zweiten Gleichstromanschlusses verbindet. Wie in Fig. 2 gezeigt, weist der positive Leitungsabschnitt 16 eine erste Leitung 20 und eine zweite Leitung 22 auf und weist der negative Leitungsabschnitt 18 eine erste Leitung 24 und eine zweite Leitung 26 auf. In der in Fig. 2 gezeigten Ausführungsform der Lade-/Entladevorrichtung 1 ist in allen Leitungen 20 bis 26 jeweils ein Schaltelement 28 bis 34 angeordnet, um die Leitungen 22 bis 26 entsprechend zu- oder wegzuschalten.

Ein Betrieb der Schaltelemente 28 bis 34 wird durch eine Steuereinheit 36, die entsprechende Schaltelement-Treiber 38 bis 44 aufweist oder mit diesen verbunden ist, gesteuert. Die Steuereinheit 36 steuert die Schaltelemente 28 bis 34 dabei in Abhängigkeit davon, ob ein Ladevorgang oder ein Entladevorgang durchgeführt wird. Um festzustellen, ob ein Ladevorgang oder ein Entladevorgang durchgeführt wird, kann die Steuereinheit 36 ein Vorzeichen bzw. eine Richtung eines Stroms der zu der Gleichstrom-Speichereinheit 8 hin oder von dieser weg fließt, bestimmen. Die Steuereinheit 36 kann den Strom beispielsweise unter Verwendung eines Shunt-Widerstands 38 erfassen, über den einen Summenstrom zu der Gleichstrom-Speichereinheit 8 bzw. von dieser weg fließt. Der Shunt-Widerstand 38 kann dabei über ein Filter 40 mit der Steuereinheit 36 verbunden sein. Im Fall eines Ladevorgangs werden alle Schaltelemente 28 bis 34 geschlossen, so dass die Leitungen 20 und 22 in dem positiven Leitungsabschnitt 16 und die Leitungen 24 und 26 in dem negativen Leitungsabschnitt 18 parallel geschaltet sind. Demzufolge kann über die parallel geschalteten Leitungen 20 und 22 bzw. 24 und 26 ein hoher Strom zum Laden der Gleichstrom-Speichereinheit 8 fließen. Im Fall eines Entladevorgangs, d.h. bei einem Fahrbetrieb des Elektrofahrzeugs, wird nur eines der Schaltelemente 28 oder 30 bzw. 32 oder 34 geschlossen. Demzufolge sind die Schaltelemente 28 bis 34 sowie die Leitungen 20 bis 26 nur für einen niedrigeren Strom auszulegen. Besonders bevorzugt werden die Schaltelemente 28 und 30 bzw. 32 und 34 durch die Steuereinheit 36 wechselweise angesteuert. Demzufolge führt jedes der Schaltelemente 28 bis 34 nur die Hälfte an Schaltvorgängen durch, wodurch eine Lebensdauer der Schaltelemente 28 bis 34 verlängert werden kann.

Um eine sichere Abschaltung der Lade-/Entladevorrichtung 1 auch in einem Fehlerfall, zum Beispiel bei Auftreten eines Überstroms, bei einem Entladevorgang, d.h. einem Fahrbetrieb, zu ermöglichen, ist in der in Fig. 2 gezeigten Ausführungsform in der ersten Leitung 24 und der zweiten Leitung 26 des negativen Leitungsabschnitt 18 jeweils eine Sprengsicherung 46 und 48 angeordnet. Die Sprengsicherungen 46 und 48 werden dabei durch die Steuereinheit 36 über jeweilige Sprengsicherungs-Treiber 50 und 52, die in der Steuereinheit 36 vorhanden sind oder mit dieser verbunden sind, angesteuert. Dabei wird nur diejenige Sprengsicherung 46 oder 48 angesteuert, d.h. gezündet, die in derjenigen Leitung 24 oder 26 angeordnet ist, über die ein Stromfluss während des Entladevorgangs erfolgt. Beispielsweise wird die Sprengsicherung 46 angesteuert, wenn das Schaltelement 32 geschlossen ist und der Entladevorgang über die Leitung 24 erfolgt. Nachdem die Sprengsicherung 46 oder 48 gezündet wurde, steht die jeweils andere Leitung 24 oder 26 für einen Notlaufmodus, wie etwa einen Limp-Home-Betrieb, zur Verfügung. Es kann sogar ein Ladevorgang mit verringerter Leistung über die noch intakte Leitung 24 oder 26 erfolgen.

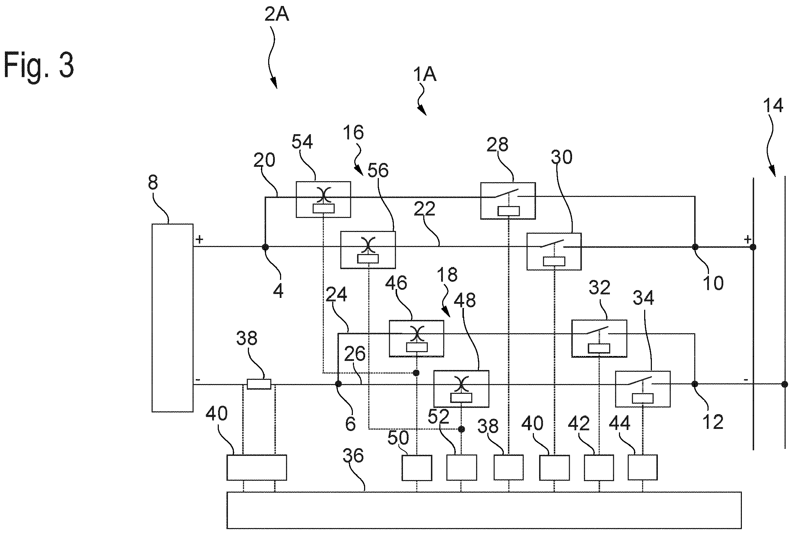

In Fig. 3 ist eine Lade-/Entladevorrichtung 1A gemäß einer weiteren Ausführungsform von der vorliegenden Erfindung, die in einer Speichervorrichtung 2A installiert ist, gezeigt. Eine Konfiguration der Lade-/Entladevorrichtung 1A aus Fig. 3 ist ähnlich der Konfiguration der Lade-/Entladevorrichtung 1 aus Fig. 2. Daher werden nachfolgend nur Unterschiede zwischen den beiden Lade-/Entladevorrichtungen 1 und 1A beschrieben.

Die Lade-/Entladevorrichtung 1A weist, wie in Fig. 3 gezeigt, jeweils eine Sprengsicherung 54 und 56 in den Leitungen 20 und 22 des positiven Leitungsabschnitt 16 auf. Die Sprengsicherung 54 wird dabei wie die Sprengsicherung 46 durch die Steuereinheit 36 über den Sprengsicherungs-Treiber 50 angesteuert. In ähnlicher Weise wird die Sprengsicherung 56 wie die Sprengsicherung 48 durch die Steuereinheit 36 über den Sprengsicherungs-Treiber 52 angesteuert. Das bedeutet, wenn die Sprengsicherung 46 gezündet wird, wird auch die Sprengsicherung 54 gezündet. Gleichsam wird die Sprengsicherung 56 gezündet, wenn die Sprengsicherung 52 gezündet wird. In der vorliegenden Ausführungsform ist die Steuereinheit 36 demnach so konfiguriert, dass sie immer die beiden Leitungen 20 und 24 oder die beiden Leitungen 22 und 26 während eines Ladevorgangs gemeinsam zuschaltet. Demnach kann durch Zünden der beiden zugeordneten Sprengsicherungen 54 und 46 bzw. 56 und 48 eine vollständige, d.h. allpolige, Trennung von der Gleichstrom-Speichereinheit 8 erfolgen.

Vorstehend wurden Ausführungsformen der vorliegenden Erfindung unter Bezugnahme auf die Figuren beschrieben. Es ist zu erwähnen, dass weitere Modifikationen denkbar sind.

Beispielsweise reicht es, wenn nur eine der beiden Leitungen in dem positiven Leitungsabschnitt und dem negativen Leitungsabschnitt mittels eines Schaltelements schaltbar ausgebildet ist. Demzufolge kann die schaltbare Leitung bei einem Ladevorgang zugeschaltet werden, so dass ein höherer Ladestrom fließen kann. In diesem Fall ist mindestens eine Sprengsicherung in einer nicht schaltbaren Leitung angeordnet. Nach Zünden der Sprengsicherung steht die schaltbare Leitung für einen Notlaufmodus zur Verfügung.

In Fig. 2 sind die beiden Sprengsicherung 46 und 48 in den Leitungen des negativen Leitungsabschnitts angeordnet. Selbstverständlich können die Sprengsicherungen auch in den Leitungen 20 und 22 des positiven Leitungsabschnitts 16 angeordnet sein.

In Fig. 3 werden die Sprengsicherungen 54 und 46 sowie die Sprengsicherungen 56 und 58 über gemeinsame Sprengsicherungs-Treiber 50 bzw. 52 angesteuert. Es ist aber denkbar, dass jede der Sprengsicherungen 54, 56, 46, 48 über einen dedizierten Sprengsicherungs-Treiber angesteuert wird.

Die Lade-/Entladevorrichtung gemäß der vorliegenden Erfindung kann als ein separates Bauteil ausgebildet sein. Die Lade-/Entladevorrichtung gemäß der vorliegenden Erfindung kann aber auch in ein Batteriemanagementsystem (BMS) integriert sein. Die Aufgaben der Steuereinheit 36 können dann durch eine Steuereinheit des BMS übernommen werden.

Die Lade-/Entladevorrichtung wurde in Bezug auf ein Elektrofahrzeug beschrieben. Es ist aber auch denkbar, dass die Lade-/Entladevorrichtung für andere Anwendungen einsetzbar ist, bei denen eine Charakteristik eines Entladestroms und eines Ladestroms unterschiedlich sind.

### Bezugszeichenliste

- 1: Lade-/Entladevorrichtung
- 1A: Lade-/Entladevorrichtung
- 2: Speichervorrichtung
- 2A: Speichervorrichtung
- 4: positiver Pol des ersten Gleichstrom-Anschlusses
- 6: negativer Pol des ersten Gleichstrom-Anschlusses
- 8: Gleichstrom-Speichereinheit
- 10: positiver Pol des zweiten Gleichstrom-Anschlusses
- 12: negativer Pol des zweiten Gleichstrom-Anschlusses
- 14: Gleichstrom-Bus
- 16: positiver Leitungsabschnitt
- 18: negativer Leitungsabschnitt
- 20 bis 26: Leitung
- 28 bis 34: Schaltelement
- 36: Steuereinheit
- 38 bis 44: Schaltelement-Treiber
- 46 und 48: Sprengsicherung
- 50 und 52: Sprengsicherungs-Treiber
- 54 und 56: Sprengsicherung
- 100: Lade-/Entladevorrichtung
- 102: Gleichstrom-Speichereinheit
- 104: Gleichstrom-Bus
- 106: positiver Leitungsabschnitt
- 108: negative Leitungsabschnitt
- 110: Schaltelement
- 112: Schaltelement
- 114: Steuereinheit

## Patentansprüche

1. Lade-/Entladevorrichtung (1, 1A), insbesondere für ein Elektrofahrzeug, die aufweist:
einen ersten Gleichstrom-Anschluss (4, 6), der mit einer Gleichstrom-Speichereinheit (8) verbunden oder verbindbar ist;
einen zweiten Gleichstrom-Anschluss (10, 12), der mit einem Gleichstrom-Bus (14) oder einem Inverter verbunden oder verbindbar ist;
einen positiven Leitungsabschnitt (16), der einen positiven Pol (4) des ersten Gleichstrom-Anschlusses (4, 6) mit einem positiven Pol (10) des zweiten Gleichstrom-Anschlusses (10, 12) verbindet;
einen negativen Leitungsabschnitt (18), der einen negativen Pol (6) des ersten Gleichstrom-Anschlusses (4, 6) mit einem negativen Pol (12) des zweiten Gleichstrom-Anschlusses (10, 12) verbindet; und
eine Steuereinheit (36) zum Steuern eines Lade-/Entladevorgangs;
**dadurch gekennzeichnet, dass**
der positive Leitungsabschnitt (16) und der negative Leitungsabschnitt (18) jeweils zwei parallele Leitungen (20 bis 26) aufweisen, wobei mindestens eine der beiden Leitungen (20 bis 26) mittels eines Schaltelements (28 bis 34) schaltbar ausgebildet ist, und
die Steuereinheit (36) so konfiguriert ist, dass sie jeweils beide Leitungen (20 bis 26) in dem positiven Leitungsabschnitt (16) und dem negativen Leitungsabschnitt (18) bei einem Ladevorgang zuschaltet und jeweils nur eine der beiden Leitungen (20 bis 26) in dem positiven Leitungsabschnitt (16) und dem negativen Leitungsabschnitt (18) bei einem Entladevorgang, insbesondere einem Fahrbetrieb, zuschaltet.

2. Lade-/Entladevorrichtung gemäß Anspruch 1, **dadurch gekennzeichnet, dass**
in der nicht schaltbaren Leitung in dem positiven Leitungsabschnitt (16) und/oder dem negativen Leitungsabschnitt (18) eine Sprengsicherung angeordnet ist, und
die Steuereinheit (36) so konfiguriert ist, dass sie die Sprengsicherung im Fall eines Fehlers, insbesondere eines Überstroms, bei einem Entladevorgang zündet.

3. Lade-/Entladevorrichtung (1, 1A) gemäß Anspruch 1, **dadurch gekennzeichnet, dass**
jeweils beide Leitungen (20 bis 26) in dem positiven Leitungsabschnitt (16) und dem negativen Leitungsabschnitt (18) mittels eines jeweiligen Schaltelements (28 bis 34) schaltbar ausgebildet sind; und
die Steuereinheit (36) so konfiguriert ist, dass sie die beiden Leitungen (20 bis 26) in dem positiven Leitungsabschnitt (16) und dem negativen Leitungsabschnitt (18) bei einem Entladevorgang wechselweise zuschaltet.

4. Lade-/Entladevorrichtung (1) gemäß Anspruch 3, **dadurch gekennzeichnet, dass**
in den beiden Leitungen (20 bis 26) des positiven Leitungsabschnitts (16) oder des negativen Leitungsabschnitts (18) jeweils eine Sprengsicherung (46, 48, 54, 56) angeordnet ist, und
die Steuereinheit (36) so konfiguriert ist, dass sie bei einem Entladevorgang nur die Sprengsicherung (46, 48, 54, 56) in der zugeschalteten Leitung (20 bis 26) im Fall eines Fehlers, insbesondere eines Überstroms, bei einem Entladevorgang zündet.

5. Lade-/Entladevorrichtung (1A) gemäß Anspruch 3, **dadurch gekennzeichnet, dass**
in den beiden Leitungen (20 bis 26) des positiven Leitungsabschnitts (16) und des negativen Leitungsabschnitts (18) jeweils eine Sprengsicherung (46, 48, 54, 56) angeordnet ist, und
die Steuereinheit (36) so konfiguriert ist, dass sie bei einem Entladevorgang nur die Sprengsicherungen (46, 48, 54, 56) in den zugeschalteten Leitungen (20 bis 26) im Fall eines Fehlers, insbesondere eines Überstroms, bei einem Entladevorgang zündet.

6. Lade-/Entladevorrichtung (1A) gemäß Anspruch 5, **dadurch gekennzeichnet, dass**
die Steuereinheit (36) so konfiguriert ist, dass sie bei einem Entladevorgang immer jeweils die gleiche Leitung (20 bis 26) in dem positiven Leitungsabschnitt (16) und in dem negativen Leitungsabschnitt (18) zuschaltet und die Sprengsicherungen (46, 48, 54, 56) in den gleichen beiden Leitungen (20 bis 26) über einen gemeinsamen Sprengsicherungs-Treiber (50, 52) zündet.

7. Speichervorrichtung (2, 2A), die aufweist:
eine Gleichstrom-Speichereinheit (8), und
einen Gleichstrom-Bus (14) oder einen Inverter,
**dadurch gekennzeichnet, dass** die Speichervorrichtung (2, 2A) ferner eine Lade-/Entladevorrichtung (1, 1A) gemäß einem der Ansprüche 1 bis 6 aufweist.

8. Fahrzeug, das **gekennzeichnet ist durch** die Speichervorrichtung (2, 2A) gemäß Anspruch 7.

9. Verfahren zum Betreiben der Lade-/Entladevorrichtung (1, 1A) gemäß Anspruch 1, das die folgenden Schritte aufweist:
Bestimmen, ob ein Ladevorgang oder ein Entladevorgang, insbesondere ein Fahrbetrieb, durchgeführt wird; und
Zuschalten der beiden Leitungen (20, 22) in dem positiven Leitungsabschnitt (16) und der beiden Leitungen (24, 26) in dem negativen Leitungsabschnitt (18) in dem Fall, dass ein Ladevorgang durchgeführt wird, oder
Zuschalten nur einer der beiden Leitungen (20, 22) in dem positiven Leitungsabschnitt (16) und nur einer der beiden Leitungen (24, 26) in dem negativen Leitungsabschnitt (18) in dem Fall, dass ein Entladevorgang durchgeführt wird.
